Europäisches Patentamt

European Patent Office

Office européen des brevets

(19)

(11) **EP 1 394 800 A2**

(12) **EUROPEAN PATENT APPLICATION**

(43) Date of publication:
**03.03.2004 Bulletin 2004/10**

(51) Int Cl.⁷: **G11B 27/02**, H04N 5/262,
H04N 7/24, G06F 17/30

(21) Application number: **03253325.9**

(22) Date of filing: **28.05.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **08.08.2002 KR 2002046801**

(71) Applicant: **SAMSUNG ELECTRONICS CO., LTD.
Suwon-City, Kyungki-do (KR)**

(72) Inventor: **Portnykh, Vladimir,
147-601 Jugong 1-danji Apt.
Suwon-si, Gyeonggi-do (KR)**

(74) Representative: **Robinson, Ian Michael et al
Appleyard Lees,
15 Clare Road
Halifax HX1 2HY (GB)**

(54) **Task-oriented nonlinear hypervideo editing method and apparatus therefor**

(57) Provided are a task-based hypervideo editing method and an apparatus which overcome problems of conventional nonlinear editors, such as Adobe Premier, by providing a descriptor language which describes user's editing commands and suggesting an algorithm corresponding to the descriptor language. In the nonlinear video editing method, first, available user actions are initialized. Next, a user action is selected from the initialized available user actions. Thereafter, input resources used to perform the selected user action are selected. Then, the selected user action is performed, and the results of the user action are examined. Finally, finishing the user action is confirmed, and the results of the user action are rendered. Accordingly, results of previous steps in an editing process can be used as real source files and computer resources are saved, thereby shortening the time required and increasing the productivity of editing.

**FIG. 3**

```
        ┌─────────┐
        │  START  │
        └─────────┘
             │
   ┌──────────────────────┐
   │   INITIALIZE LIST OF │ ── 310
   │  AVAILABLE USER ACTIONS │
   └──────────────────────┘
             │
   ┌──────────────────────┐
   │   SELECT ACTION FROM │ ── 320
   │ AVAILABLE USER ACTIONS LIST │
   └──────────────────────┘
             │
   ┌──────────────────────┐
   │ SELECT INPUT RESOURCES │ ── 330
   └──────────────────────┘
             │
   ┌──────────────────────┐
   │  PERFORM SELECTED USER │
   │ ACTION AND EXAMINE RESULTS │ ── 340
   │    OF THE PERFORMANCE │
   └──────────────────────┘
             │
   ┌──────────────────────┐
   │ CONFIRM FINISHING ACTION │ ── 350
   └──────────────────────┘
             │
   ┌──────────────────────┐
   │    RENDER RESULTS    │ ── 360
   └──────────────────────┘
             │
        ┌─────────┐
        │   END   │
        └─────────┘
```

EP 1 394 800 A2

**Description**

The present invention relates to a nonlinear hypervideo editing method, and more particularly, to a hypervideo editing method and an apparatus that overcome problems of conventional nonlinear editors, such as Adobe Premier.

Examples of home or professional media editors include timeline editors or storyboard editors. Timeline editors can express an image as a set of rows of screens according to time. However, since resources are configured in a form such that various video clips, sound tracks, and effects are stacked, the timeline editor is not suitable to edit videos according to the flow of time. For example, the time line editor requires a great number of windows to edit long movies.

Storyboard editors arrange media resources in units of a series of blocks from left to right. Overlap between clips is managed by placing a transition called a T-block into the space between the clips and then tuning the properties of a transition using an additional dialog box.

Storyboard editors as described above allow users to deal with still images and organize a slide show easily. However, storyboard editors have some functional limitations because editing lacks a concept of time.

Korean Patent Publication No. 1999-55423 discloses a method of processing videos using a project table and managing data on changeover effect filters and special visual effect filters and a method of producing new digital videos without decompressing videos. To achieve these methods, the concept of a project table is used, which is comprised of clip IDs, storages, track starts, track ends, source starts, source ends, types, track numbers, and apply clips. However, the invention provided by the above Korean patent has no concept of user's editing commands as in the present invention and does not disclose a concrete descriptor language of editing commands.

U.S. Patent No. 5,539,527 discloses a nonlinear video editing system, which includes a randomly accessible image data storage unit, an FIFO, a video effect unit, and a desired shot storage unit. The nonlinear video editing system is different from a nonlinear video editing method according to the present invention.

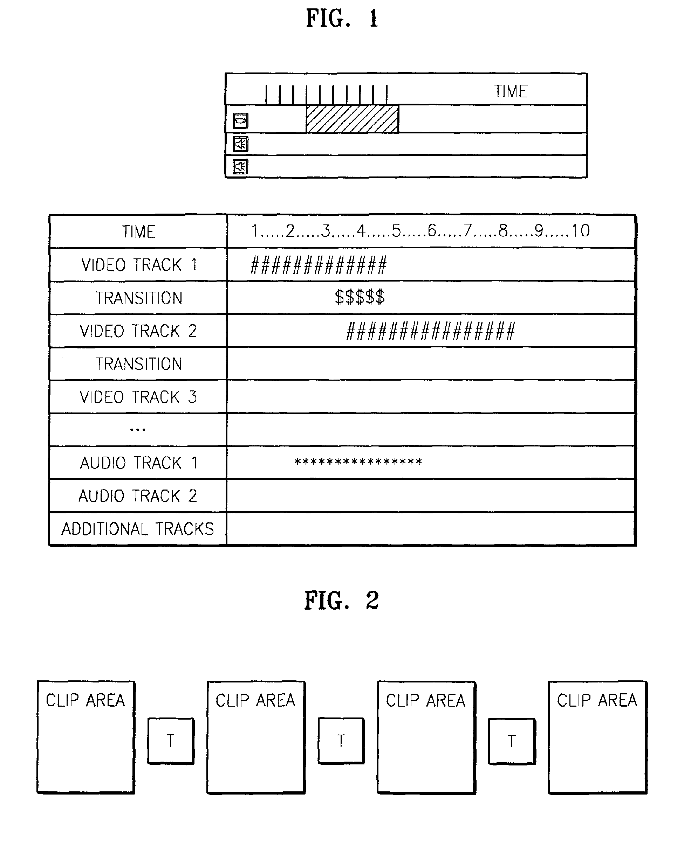

Figure 1 is a table showing the concept of a timeline editing method. In the timeline editing method, a video is expressed in a set of rows of video clips according to time, and the set of rows stacks various video clips, sound tracks, and effects in sequence.

To begin editing, an icon representing a video clip is selected and dragged into a timeline interface. The video clip is represented as a bar, and the length of the bar indicates the actual duration of the clip in accordance to the time ruler of Figure 1.

A desired editing operation is performed with the bar, and at the same time, different editing operations can be performed by controlling the time. Using a mouse, a user can point an exact time to start displaying. Using additional commands, a user can split a movie into separate pieces, delete some of the pieces and re-arrange others, and define a transition while easily controlling the time of transition.

The implementation of the timeline method usually requires a rendering operation before previewing. Since there is a close connection with time, the timeline method is unsuitable for dealing with still images and video clips simultaneously.

The timeline method is unsuitable for long video clips because a long time for scrolling is needed, and accordingly, several screens are needed. In the case of a 90-minute long movie, more than 30 screens are needed.

A change in time scale can take place, however it disables the ability to precisely edit in a specific place. To perform precise editing, additional windows are needed. The timeline method is oriented to work with several consecutive clips. In other words, if ordered clips are placed into different tracks, it is possible to define a transition and control its duration. It is not required for different clips to be placed into the same line, however, if not done as such, the definition of transition becomes more complicated.

Thus, the timeline method is suitable for editing short video clips and an exact example of a linear editing approach and its limitations. The linear editing approach is not obligatory at present, but influences present nonlinear editing systems. In other words, in the timeline method, dealing with still images and organizing them into a sequence to display them in a proper order are difficult.

Figure 2 illustrates the concept of a storyboard editing method. To begin editing in the storyboard editing method is absolutely the same as that of the timeline method. To be more specific, first, a user selects a thumbnail and drags it into a storyboard interface. The benefit of the storyboard editing method is its lucidity. Thereafter, the user makes a series of blocks of media resources and arranges the blocks so that they move from left to right. The overlap between clips is managed by placing a transition called a T-block into the space between the clips and then tuning properties using an additional dialog box.

Editors adopting the storyboard editing method allow users to deal with still images and to organize a slide show easily. However, editing possibilities are limited because there is no time concept.

Some editing tasks can be effected efficiently. For example, if two video clips are to be merged, it is necessary to put them into consecutive cells and select them in order to execute the merge command.

However, there exists some problems in an operation of splitting a merged video clip into two independent video clips. In fact, splitting cannot be performed in a storyboard interface because of the absence of time concept.

Generally, any operations related to time need additional windows that make the storyboard editing method more complex than the timeline editing method.

The storyboard method may not be a linear approach, but it still has influence on the linear approach. For example, the transition is defined as an indication to segue from one video clip to another. Accordingly, only two video clips are involved. This is a rule in linear editing methods. But, at present, simultaneous processing of three video sources is required to obtain good performance.

An aim of the present invention is to provide a video editing method and apparatus which addresses the above problems, especially which reduces the use of computer resources, shortens the time required and/or increases productivity of editing. A preferred aim of the present invention is to provide a video editing method and apparatus that is simple and efficient for the user even when editing a long video clip. Another preferred aim is to allow the user to perform complex editing operations, such as the simultaneous processing of more than two video sources.

According to the present invention there is provided an apparatus and method as set forth in the appended claims. Preferred features of the invention will be apparent from the dependent claims, and the description which follows.

The present invention provides a task-oriented nonlinear hypervideo editing method and apparatus for efficiently performing an editing process by providing a novel descriptor language for user's editing actions, dynamically controlling the editing process, and expressing the results of the edition in the XTL.

According to an aspect of the present invention, there is provided a nonlinear video editing method, in which a user action to be selected and performed is expressed as a template that is comprised of some components and described in an extended Markup Language (XML) and is then performed, and the result of the user action is then rendered.

In the nonlinear video editing method, first, available user actions are initialized. Next, a user action is selected from the initialized available user actions. Thereafter, input resources used to perform the selected user action are selected. Then, the selected user action is performed, and the results of the user action are examined. Thereafter, the completion of the user action is confirmed, and the results of the user action are rendered.

According to another aspect of the present invention, there is provided a computer recording medium which stores a computer program for executing the nonlinear video editing method.

According to still another aspect of the present invention, there is provided a nonlinear video editing apparatus including a user action initialization unit initializing available user actions, a user action input unit receiving a user action selected by a user from the initialized available user actions, a resource input unit receiving input resources used to perform the selected user action, a user action performing unit performing the selected user action, a result examining unit examining the results of the selected user action, and a rendering unit confirming the completion of the selected user action and rendering the results of editing.

According to still yet another aspect of the present invention, there is provided a graphic user interfacing method in a nonlinear video editor. In the graphic user interfacing method, first, available user actions are presented to a user, and a screen for receiving a user action selected by the user is provided. Next, a file source screen for presenting and displaying a source file used to perform the selected user action is provided. Then, a result screen for displaying results of the selected user action performed using a source file selected by the user is provided.

For a better understanding of the invention, and to show how embodiments of the same may be carried into effect, reference will now be made, by way of example, to the accompanying diagrammatic drawings in which:

Figure 1 is a table showing the concept of a timeline editing method;

Figure 2 illustrates the concept of a storyboard editing method;

Figure 3 is a flowchart for illustrating a video editing method according to the present invention;

Figure 4 shows a template that describes user's actions;

Figure 5 is a table showing the properties of a template TRANSFORM, the properties of a template RESOURCE, and the properties of a template VUNION;

Figure 6 shows a splitting action template;

Figure 7 shows a transition action template;

Figure 8 shows a merging action template;

Figure 9 shows an inserting action template;

Figure 10 is a table describing basic user actions;

Figure 11 shows a screen called a decision center;

Figure 12 shows a screen that appears when a splitting action is selected;

Figure 13 shows an example in which user actions to perform a splitting operation are described;

Figure 14 shows an example in which user actions to perform an inserting operation are described;

Figure 15 is a table showing the attributes of a language proposed in the present invention;

Figure 16 illustrates an insertion of BBB.AVI into AAA.AVI;

Figure 17 shows a result of an optimization of the contents of Figure 16;

Figure 18 is a block diagram of a nonlinear video editing apparatus according to the present invention;

Figure 19 is a flowchart for illustrating an algorithm for verifying edition results;

Figure 20 is a block diagram of an architecture of a virtual union (vunion) proposed in the present invention; and

Figure 21 is a flowchart for illustrating an algorithm for optimizing edition results.

A timeline editing method and a storyboard editing method have already been described above with reference to Figures 1 and 2. The two editing methods have many variations. However, it can be observed that no new ideas are added and the variations stick to the above-described principle. Existing software packages are trying to implement these modifications in the best way by paying special attention to the technical aspects of video transcoding and by slightly improving the two editing methods described above.

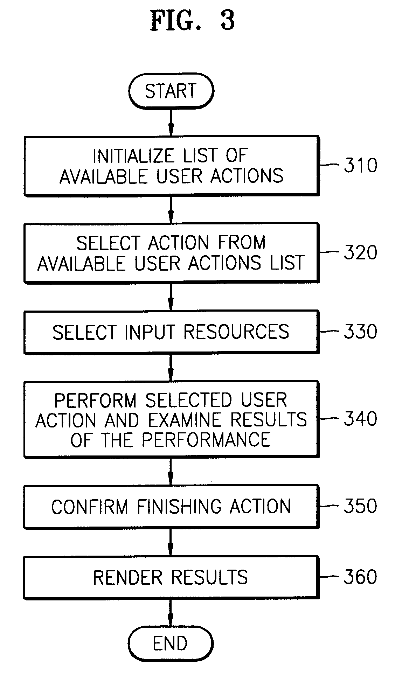

Figure 3 is a flowchart for illustrating a video editing method according to the present invention. The editing method according to the present invention is based on a novel idea in which a video editing process is considered a decision-making process. Accordingly, attention is paid on the logic of editing rather than other factors.

The present invention proposes a novel descriptor language of user actions. The novel descriptor language is called an AV Station Editing Language (AVSEL). The AVSEL is based on an eXtended Markup Language (XML), so a term "hypervideo" is used. The present invention also provides a special algorithm to dynamically control an editing process and express editing results in terms of an XML transformation language (XTL). Furthermore, the present invention provides a language analyzer and a grammar translator for translating from AVSEL to XTL or vice versa.

The video editing method of Figure 3 has the following special characteristics. First, no rendering is performed during editing. Second, the results of previous operations in Figure 3 can be used as real source files during editing. Indeed, the results are virtual, logical results, but appear as real media sources for users. Thus, computer storage resources are saved, and the productivity of editing is noticeably increased by shortening required time. Third, user's actions can be put into a decision list. An editing system knows what kind of rendering operation is to be executed in the future after finishing editing. Fourth, a rendering process is algorithmically optimized using a method. Fifth, the results of editing can be expressed in three different forms: a list of performed actions, logical results of actions performed for rendering, and real media files. Sixth, conversion between logical results in an absolute form and logical results in related forms is implemented. Seventh, the openness is not only for new video/audio transforms but also for new user actions.

In the editing method according to the present invention, first, a list of available user actions is initialized, in step 310. An action template language, i.e., AVSEL, is described here.

Next, an editing process written as a sequence of user actions expressed in the user action template language is performed. Every user action consists of several steps:

step 320 of selecting an action from the available user actions list; step 330 of selecting input resources before performing operations to implement the selected action described in a language described later; and step 340 of performing the selected action and simultaneously examining action results.

In step 350, after examination of the action results, a finishing action is confirmed. In step 360, rendering is performed.

Looking at the AVSEL for describing user actions, different categories of users have different aims of editing and pay attention to different aspects of an editing process. Step 310 is actually a pre-editing process, which includes identifying user needs and configuring a method in accordance with the needs.

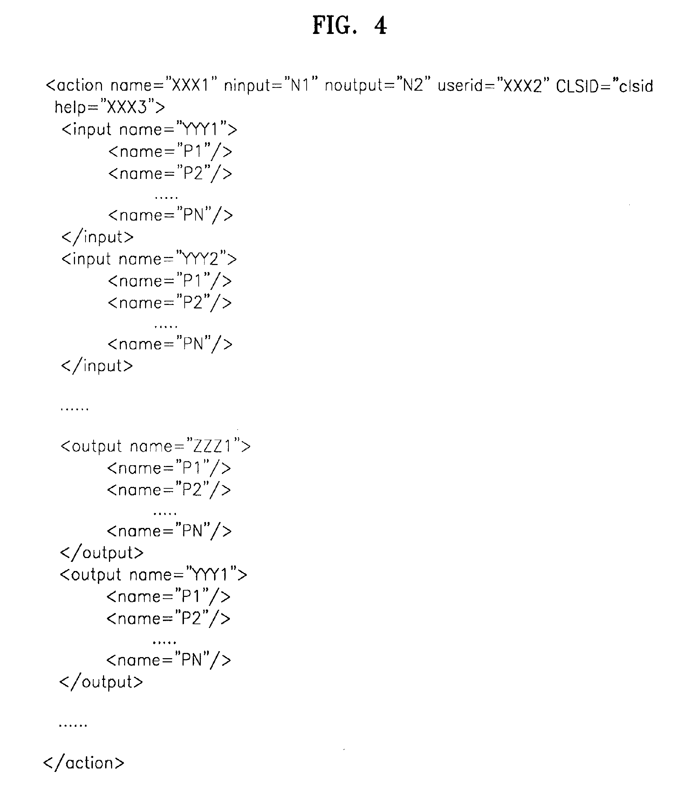

Figure 4 shows a template that describes user actions. In Figure 4, XXX1 denotes the name of an action, N1 denotes the number of input parameters, N2 denotes the number of output parameters, userid indicates the level of access to the action, CLSID denotes a clsid of the action, and help indicates a small tip about the action. Similarly, YYY1 denotes the name of an input resource, P1 through PN denote the names of resource characteristics, and ZZZ1 denotes the name of an output result. Here, action, input, output, help, name, userid, ninput, and noutput are reserved words.

There are three pre-defined names of resources: TRANSFORM, RESOURCE, and VUNION. TRANSFORM means transition or effects that can be applied to describe a certain behavior of resources. RESOURCE means a physically existing real resource, such as movie clips. VUNION means a virtual union of real resources and transforms.

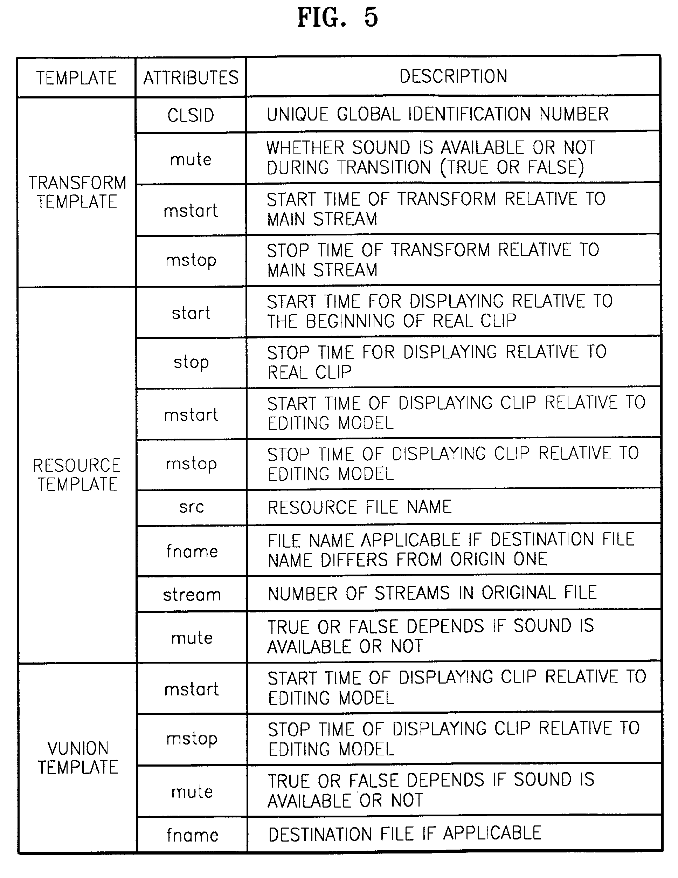

Figure 5 is a table showing the properties of TRANSFORM, the attributes of RESOURCE, and the attributes of VUNION.

Hereinafter, how the above-described template is used will be described by using some examples.

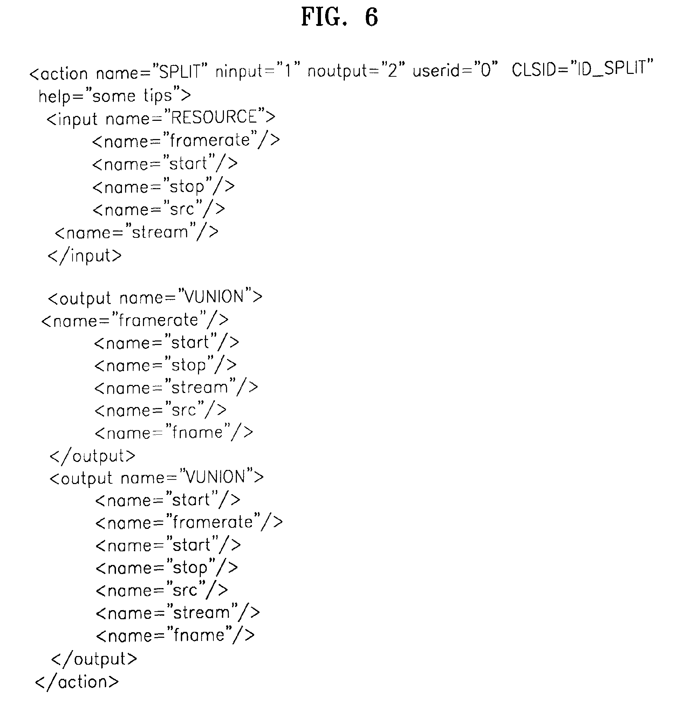

Figure 6 shows a SPLIT action template. A SPLIT operation has one input parameter and two output parameters. Input and output parameters are based on the resources. In a case where an input parameter is a real file, output parameters are separated results that are accessible independently. Accordingly, an attribute "fname" is applicable.

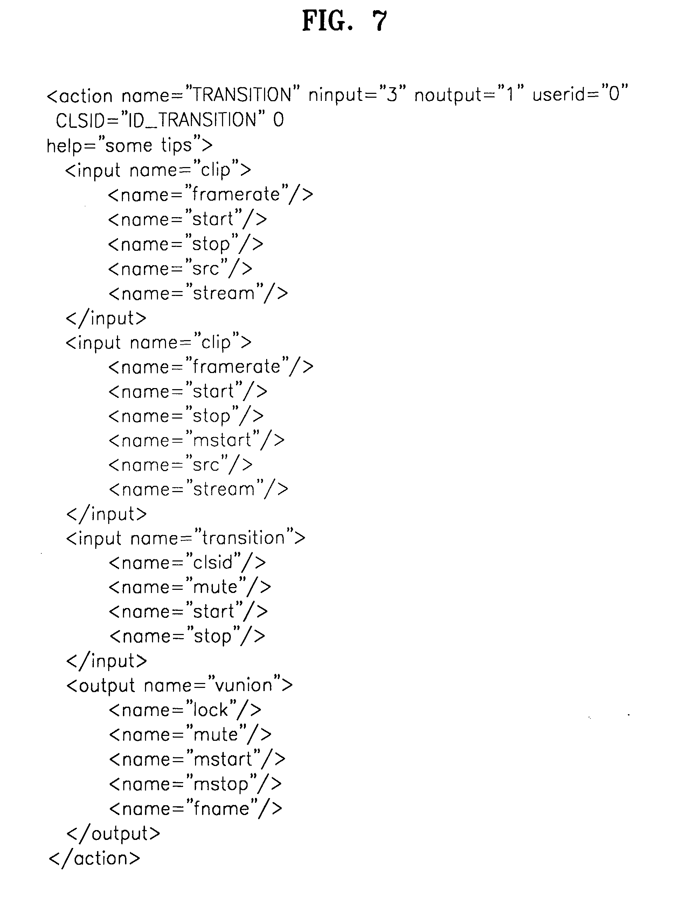

Figure 7 shows a TRANSITION action template. As shown in Figure 7, a TRANSITION between two video clips has three input parameters, namely, two real resources and a transition description. An output parameter is a union or a combination of the input parameters. If a result of an operation is accessible as a whole union, "fname" must indicate this case. "mstart" is 0 as a default, and "mstop" can be a difference between the length of a transition and the sum of the lengths of the first and second video clips.

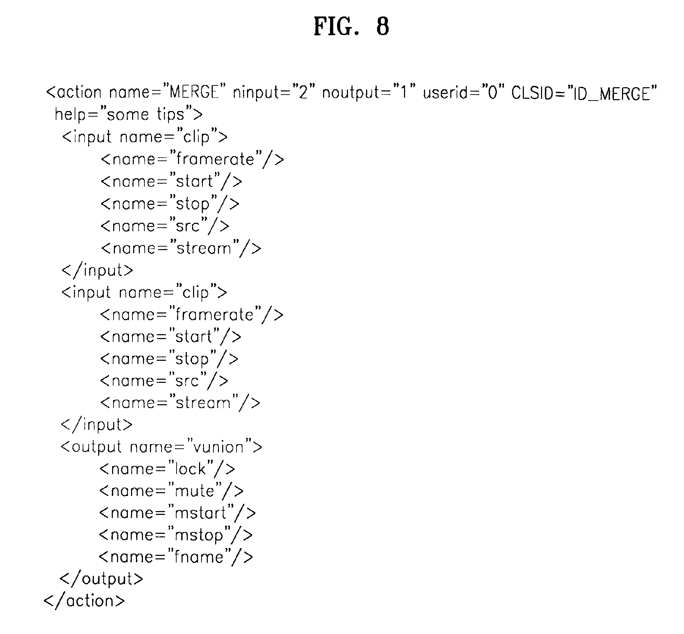

Figure 8 shows a merging action template. A merging operation means concatenating two resources one by one to make a new resource, so "fname" can be used as the result. "mstart" is 0, and "mstop" is equal to the sum of the lengths of the first and second video clips.

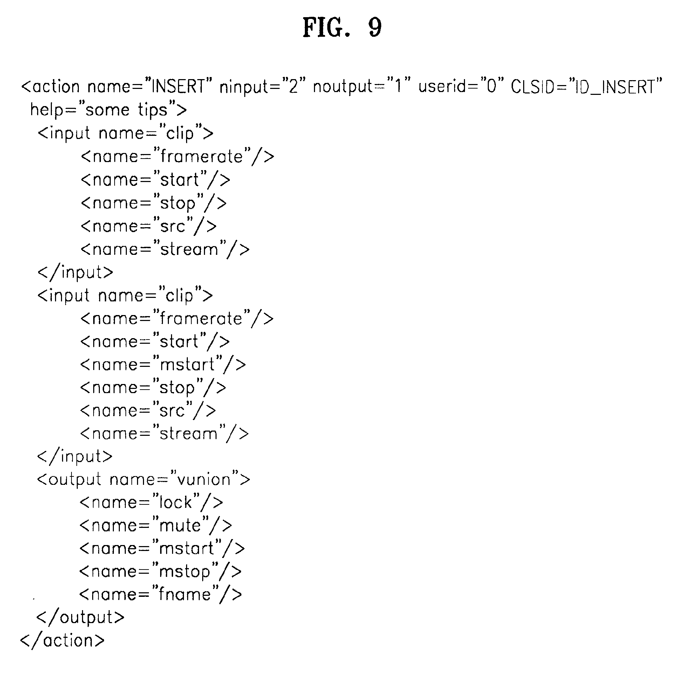

Figure 9 shows an inserting action template. In Figure 9, a real video clip, which is a second resource, has an attribute "mstart" which indicates the time relative to the insertion point of a first video clip. "mstart" is 0 as a default, "mstop" is equal to the sum of the duration lengths of the first and second video clips, and "mlength" is the sum of the mstop of the first video clip and the mstop of the second video clip.

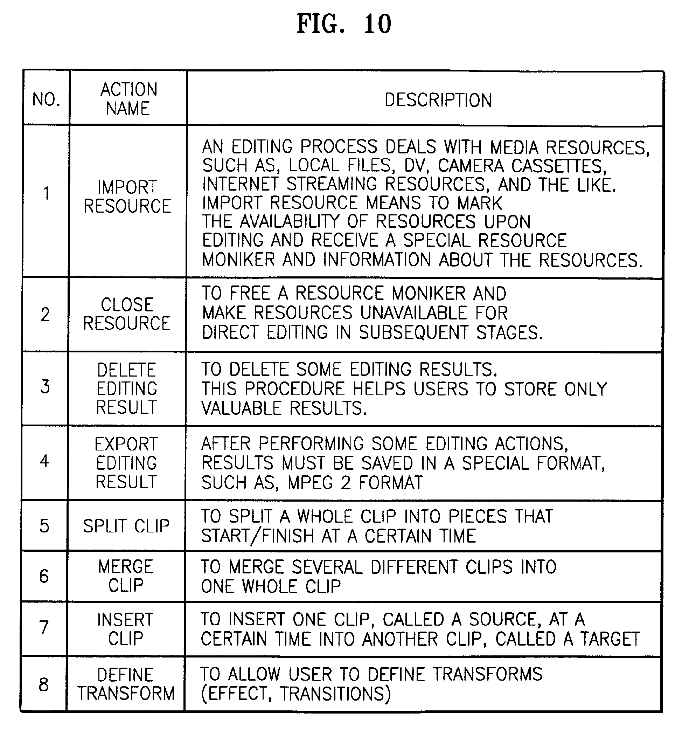

Figure 10 is a table describing basic editing actions. Further user actions can be described. A list of available actions is contained in a *.ini file of an editor. The user action template language provided by the present invention is totally different from an XTL in terms of both idea and usage. The latter language expresses an editing process in terms of results using an approach for rendering process optimization. Accordingly, the latter language is related to the language provided by the present invention but is not the same. The language provided by the present invention describes user actions, while the XTL describes the results of an editing process.

Upon an initialization of user actions, the availability of every user action is re-checked, and a main window is configured.

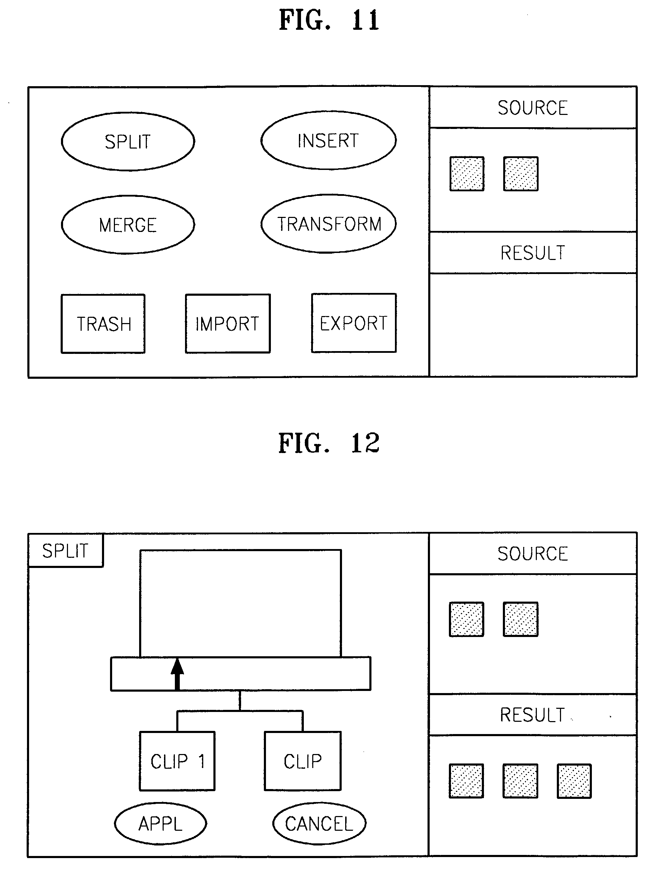

Figure 11 shows a screen called a decision center. An editing process starts from displaying a main window called the decision center of Figure 11. In the first step, a desired action is selected. Some type of operation can be performed on the screen of Figure 11. For example, the deletion of results can be performed by dragging a button "RESULT" onto a button "TRASH". Some actions need an additional step. For example, after a splitting action "SPLIT" is selected, another window appears as shown in Figure 12.

Figure 12 shows a screen that appears when a splitting action is selected. A media source is activated by dragging a source or result icon to be split into a main area or double clicking on the source icon to be split. A split task is performed by controlling a scrollbar under the screen indicating the split position and pressing a button 'APPL'. Split results are displayed on the result window. However, results are not available as real files for users at this time, and a rendering is performed after finishing editing since the system knows the suitable form of rendering operation that is to be executed. Thus, results are logical results, but they appear as real media resources for users.

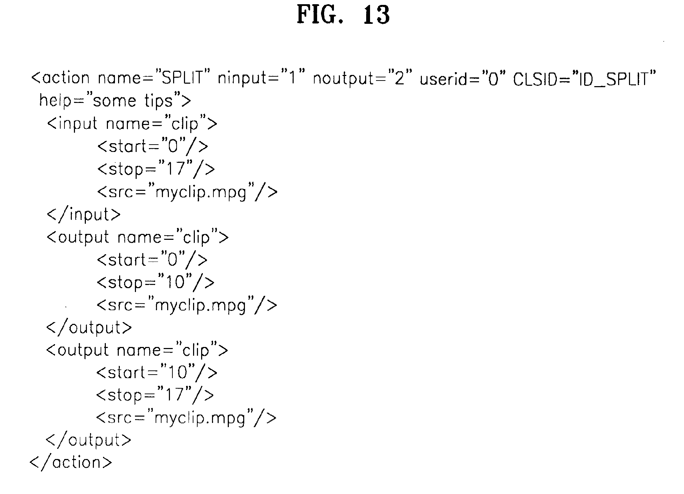

Figure 13 shows an example in which user actions to perform a splitting operation are described. A decision list denotes a list of user actions performed. In a case of a splitting operation, the next information is put into the decision list. In Figure 13, some parameters are omitted. The omitted parameters are treated as default behaviors. In the example of Figure 13, the original video clip "myclip.mpg" is split into two clips: the first clip having a duration of 10 starting from the very beginning; and the second clip having a duration of 7 starting from 10.

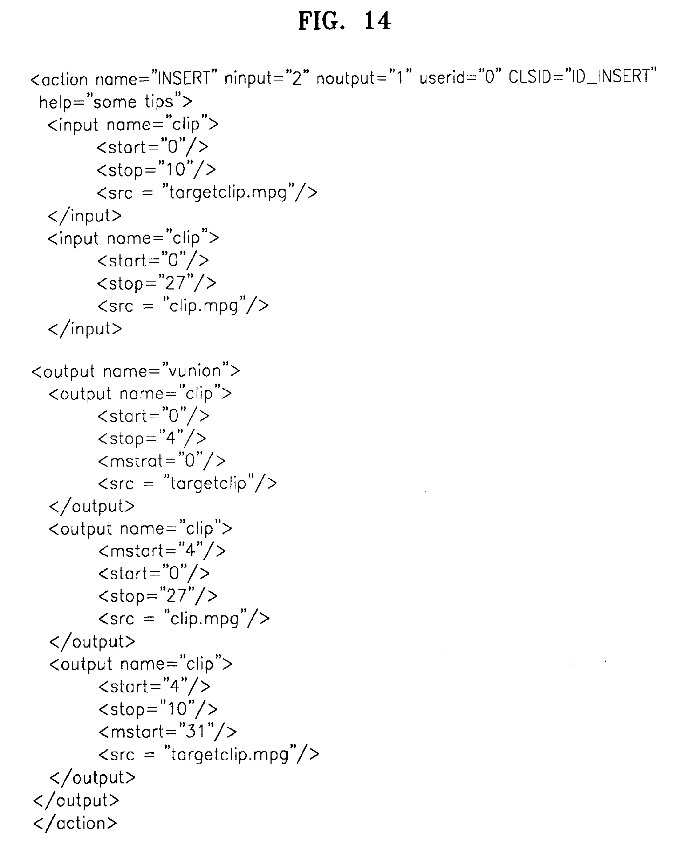

Figure 14 shows an example in which user actions to perform an inserting operation are described. Because a vunion is used, the result is treated as one video clip but has a complex structure. "mstart" denotes the time in a union proposed by the present invention. A union is defined as a small timeline. The editing method according to the present invention helps users to deal with time. The algorithm for calculating "mstart" depends on the type of actions and must be provided by an action itself as well as the process of implementing the action. However, there is also a general algorithm for calculating "mstart". According to the general algorithm, "mstart" for the first video clip in the union is 0, "mstart" for the second video clip in the union is equal to the duration of the first video clip, and "mstart" for every next video clip increases by the duration of the previous video clip.

After confirmation of an action finishing, a user can select another action or repeat the same action. Every action is added to an action list. In the editing method according to the present invention, action results are available immediately without any time delay, but they are virtual. User actions and their results are expressed in the language provided by the present invention, and they will be exported so as to become a real result after a special command is executed.

Users can create a decision list manually because the decision list is an open source and accessible in text editors. A language description is available, and another tool can be used to automatically produce the decision list.

If a user wants to have real results, the user has just to press a button EXPORT after every operation. Accordingly, real sources are generated, but it takes extra time and computer resources. As a default after finishing editing, the list of user actions is available.

After the finishing of an action is confirmed, rendering is performed. Users can achieve certain results in a way that is optimal for users although it is not optimal for a rendering process. Hence, there is a need to present obtained results in another way. There are 3 principally different formats available: a user decision list (transcription of user actions), a result summary, and a real media file(s). The user decision list has already been described above, and the real media file(s) is the same as a conventional media file(s).

The result summary is based on the XML and deals with sources as links. The main difference from the user decision list is that information on how these results are obtained is ignored, and attention is only concentrated on the results. In this format, all user actions are summarized, and every virtual result is substituted by a description on how it was obtained. Contents are sorted by time according to a value "mstart", and extra nesting is eliminated. This format is almost ready for rendering and is convertible into the XTL. According to this converted format, user actions are recovered. Results of editing are results of user actions, so the language proposed by the present invention deals with TRANSFORM, RESOURCE, and VUNION. These attributes are:

TRANSFORM = {CLSID, mute, mstart, mstop}
RESOURCE = {start, stop, mstart, mstop, src, fname, stream, mute}
VUNION = {mstart, mstop, mute, fname}

These are basic components of user action descriptions. Because the property of a transform can vary, only a basic structure can be fixed.

The fundamental semantic of the language provided by the present invention is equal to the semantic of the XTL, so it will not be described in detail. Compared with XTL from Microsoft, there are some critical improvements, some of which are technical and others which are really novel. This technical idea is defined in the attributes of the language provided by the present invention.

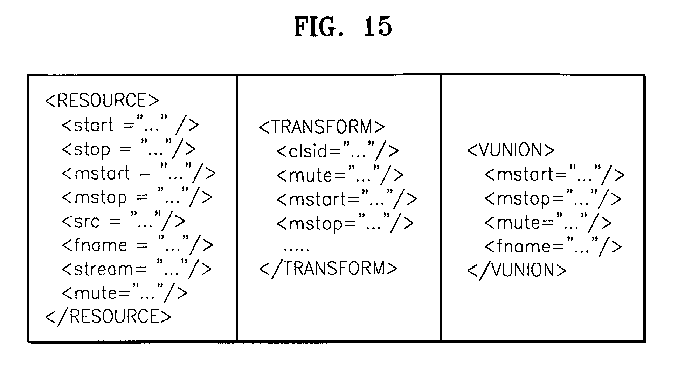

Figure 15 is a table showing the attributes of the language proposed by the present invention. Instead of using "'"', "''" can be used or any symbols cannot be used. Term RESOURCE is similar to CLIP in the XTL, but some extra attributes have been removed from the RESOURCE. TRANSFORM is a combination of TRANSITION and EFFECTS in the XTL, the combination of which was made to simplify an editing process. Term VUNION actually brings about the present invention's distinctiveness. VUNION has attributes "mstop" and "mstart". The present technologies lack these attributes, which are critical to optimize the rendering process.

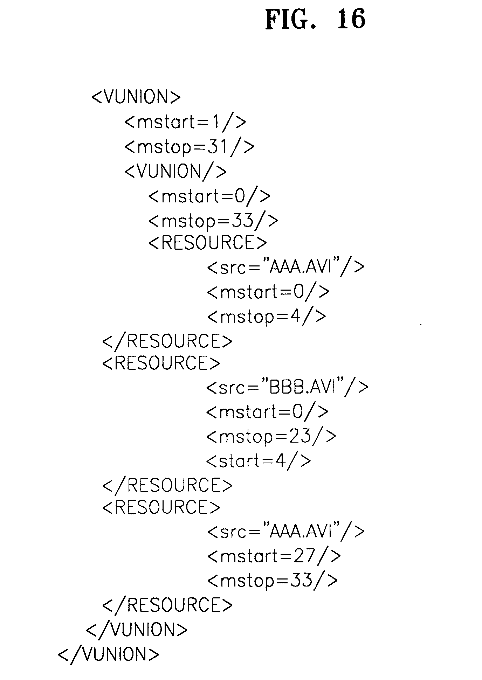

If a simple scenario is taken as an example, there are two files AAA.AVI and BBB.AVI, and their durations are 10 and 23, respectively. BBB.AVI is inserted into AAA.AVI starting from 4. Then, the first one second is cut from the beginning of AAA.AVI and rendering is performed. The last two seconds of AAA.AVI are cut and then rendering is performed. This scenario is expressed in Figure 16.

Figure 16 illustrates an insertion of BBB.AVI into AAA.AVI. Every nested VUNION must be rendered before a parent VUNION, because the nested VUNION provides resources and the hierarchy of a union optimizes a rendering process.

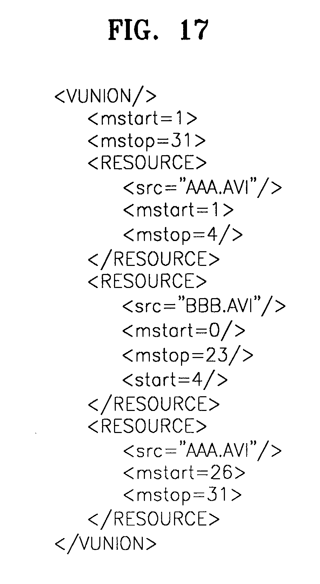

Figure 17 shows a result of an optimization of the contents of Figure 16. The effect of optimization is expressed in terms of time required for optimization if it is done in real time. A non-optimized result is rendered (31-1)+(33-0)=63, and an optimized result takes (31-1)=30. Hence, the optimization in the language provided by the present invention is two times more effective than an existing technology.

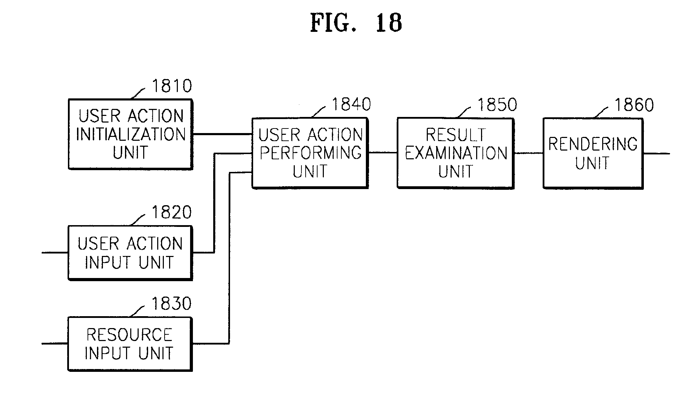

Figure 18 is a block diagram of a nonlinear video editing apparatus according to the present invention. The nonlinear video editing apparatus includes a user action initialization unit 1810, a user action input unit 1820, a resource input unit 1830, a user action performing unit 1840, a result examination unit 1850, and a rendering unit 1860.

The user action initialization unit 1810 initializes available user actions. The user action input unit 1820 receives an action selected by a user from the initialized available user actions. The resource input unit 1830 receives input resources used to perform the selected user action. The user action performing unit 1840 performs the selected user action. While the selected user action is being performed, the result examination unit 1850 examines results. The rendering unit 1860 confirms finishing the action and renders results.

Each of the user actions includes information on the name of the action to be performed, the number of input parameters used by the action, the number of output parameters output as the results of the action, and the level of access to the action to be performed.

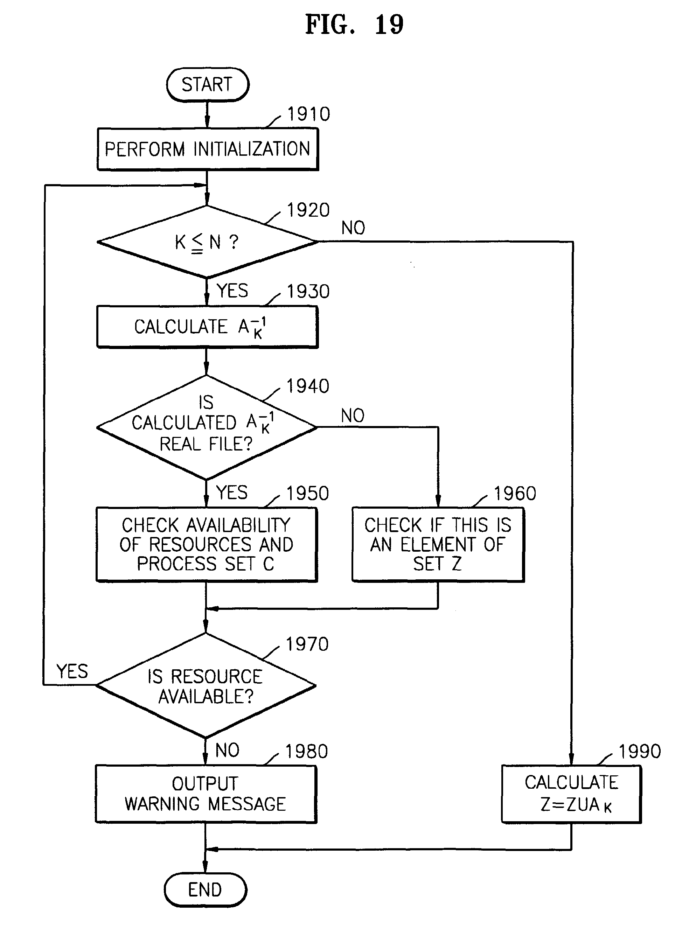

Figure 19 is a flowchart for illustrating an algorithm for verifying the results of editing. Every program language consists of both syntax and semantics. XML, which is a currently used markup language, also has these characteristics, and a complier checks the consistency of the meaning of input information. The novel language provided by the present invention also has these characteristics and has additional unique properties.

First of all, user actions can be randomly accessed. User actions are completed by random access results. The verification algorithm of Figure 19 is an algorithm for verifying the user actions.

Before describing Figure 19, some terms are defined. C denotes a resource file and is expressed as $C = \{c_j\}_j$. Every user action is treated as a function and defined as in Equation 1:

$$A_{11}, A_{12}, \ldots, A_{ij}, \ldots, A_{nm} : C^n \rightarrow C^m \tag{1}$$

wherein:

$C^n = \{(c^1, c^2, \ldots, c^j, \ldots, c^n)\}$,
$c^j \in C$,
$j = 1, \ldots, n$,
$C^m = \{(c^1, c^2 \ldots, c^i, \ldots, c^m)\}$
$C^i \in C$, and
$i = 1, \ldots, m$.

$Z = \{A_{11}, A_{11}, A_{11}, A_{11}\}$ is defined as a collection of user actions. $A_K^{-1}$ is an inversed function and defined as in Equation 2:

$$A_k^{-1} \in (U, A_i) \cup C, I = 1 \ldots k-1 \tag{2}$$

In the verification process, first, initialization is performed in step 1910. In the initialization step, Z is set to be { }, N, the number of user actions, is received, and K is set to be 1. In step 1920, it is determined whether $K \leqq N$. In step 1930, $A_K^{-1}$ is calculated if it is determined in step 1920 that $K \leqq N$. In step 1940, it is checked if the calculated $A_K^{-1}$ is a real file.

If the calculated $A_K^{-1}$ is a real file, the availability of a resource is checked, and a resource file C is processed, in step 1950. On the other hand, if the calculated $A_K^{-1}$ is not a real file, it is checked if the calculated $A_K^{-1}$ is an element of Z, in step 1960. In step 1970, it is checked if a resource is available. If the resource is available, the method goes back to step 1920. If the resource is not available, a warning message is output, in step 1980. This process is performed until K is equal to N. If K is equal to N, $Z = Z \cup A_K$ is calculated, in step 1990.

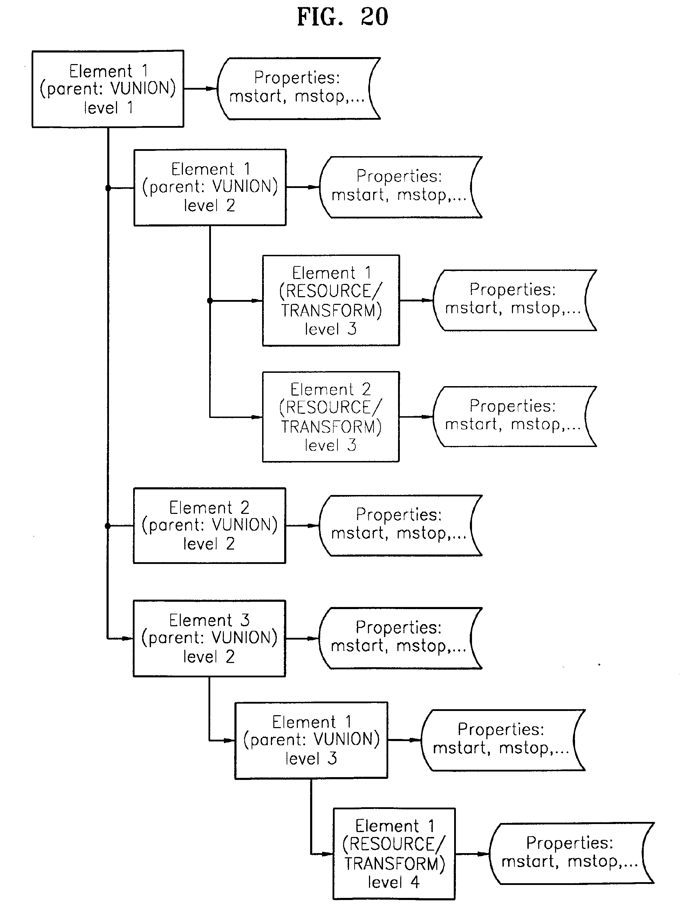

Figure 20 is a block diagram of an architecture of a virtual union (vunion) proposed in the present invention. As shown in Figure 20, a vunion is hierarchically configured and has properties, such as, "mstart", "mstop", etc.

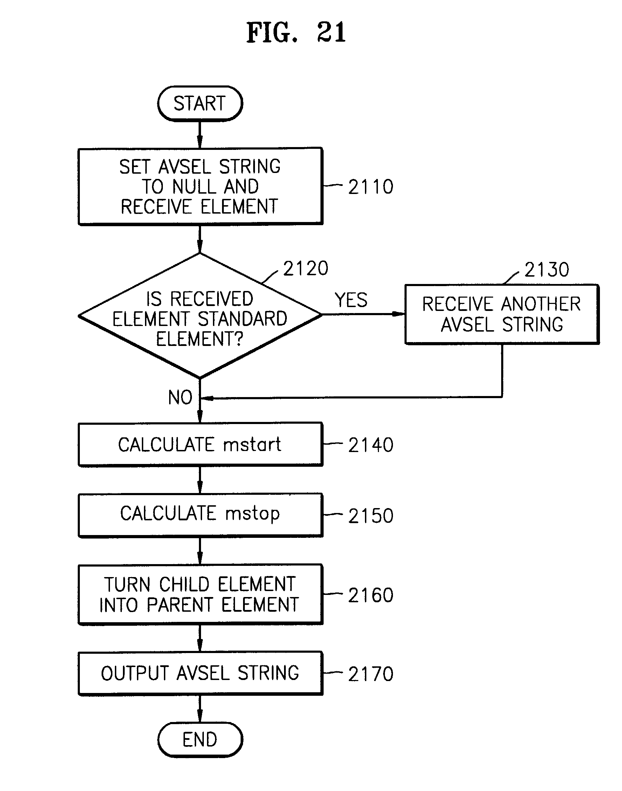

Figure 21 is a flowchart for illustrating an algorithm for optimizing the results of editing. Rendering is the most important part in an editing process because the rendering process occupies a great amount of time. Hence, optimization of the rendering process is significantly important. The time required to perform rendering can be reduced using some well-known methods, among which there is a method of improving an encoding technique. This method does not greatly reduce the rendering time. However, the optimization method according to the present invention excels in reducing the rendering time.

In the optimization method, first, an AVSEL string is set to null, and a first element is received, in step 2110. In step 2120, it is determined whether the received element is a standard element. In step 2130, another AVSEL string is received if it is determined that the received element is a standard element.

In step 2140, "mstart" is calculated if it is determined that the received element is not a standard element. "mstart" is calculated by setting Klopt to be "start", moving to the first nested element, and performing the while sentence:

```
While (K1opt > mstop - mstart)

    { K1opt = K1opt - (mstop - mstart)

     Delete current element

     Move to the first nested element

    }
```

After escaping from the while loop, "mstart" and "mstop" of every parent element are adjusted to those of every nested element. In step 2150, "mstop" is calculated by setting K2opt to be "mstop", moving to the last nested element, and performing the while sentence:

```
While (K2opt < mstart)

    {

     Delete current element

     Move to the last nested element

    }
```

Thereafter, K2opt is stored in "mstop".

After the calculation of "mstart" and "mstop", a child element is turned into a parent element, in step 2160. In step 2170, the AVSEL string is output.

This algorithm is applied to every element to obtain an AVSEL string. In other words, the next element is received and undergoes the above-described procedure.

The embodiments of the present invention can be written as computer programs and can be implemented in general-use digital computers that execute the programs using a computer readable recording medium. Examples of computer readable recording media include magnetic storage media (e.g., ROM, floppy disks, hard disks, etc.), optical recording media (e.g., CD-ROMs, or DVDs), and a storage medium such as a carrier wave (e.g., transmission through the Internet).

As described above, the present invention provides a novel descriptor language of user actions and provides a special algorithm for dynamically controlling an editing process and expressing editing results in the XTL. Accordingly, results of the previous steps in an editing process can be used as real source files and computer resources are saved, thereby shortening required time and increasing the productivity of editing.

In a video editing method according to the present invention, a user has to identify a problem first, clearly understand input information, and accomplish a task according to a special procedure to obtain certain results. In this method, results having transitions and effects can be previewed without being rendered, while Adobe Premier cannot automatically preview results.

The video editing method according to the present invention is designed to have an open architecture: a user has direct access to a decision list and can add/remove any resources. Also, a user can use user-defined transformation if its description is available in a certain format.

The method allows users to repeat the same action several times to achieve a desired result and even repeat just a certain operation that was done several steps before without repeating these steps.

Editing and previewing stages are combined, but rendering is separated and not necessary required. Rendering can be performed as the last stage of an editing process. Intervening results are stored as links, which means hypervideo editing. Hypervideo editing helps to optimize an encoding procedure, simultaneously use resources in different formats, save computer resources, e.g., a hard disk or memory, and efficiently manage the editing process.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s) . The invention extends to any novel one, or any novel combination, of the features disclosed in this specification (including any accompanying claims, abstract and drawings), or to any novel one, or any novel combination, of the steps of any method or process so disclosed.

**Claims**

1. A nonlinear video editing method comprising:

    expressing a user action to be selected and performed as a template that is comprised of some components and described in an extended Markup Language (XML); and

    performing the user action and rendering the result of the user action.

2. The nonlinear video editing method of claim 1, wherein the components include information on the name of the user action to be performed, information on the number of input parameters used in the user action, information on the number of output parameters output as the results of the user action, and information on the level of access to the user action.

3. A nonlinear video editing method comprising:

    initializing available user actions;

    selecting a user action from the initialized available user actions;

    selecting input resources used to perform the selected user action;

    performing the selected user action and examining the results of the user action; and

    confirming finishing of the user action and rendering the results of the user action.

4. The nonlinear video editing method of claim 3, wherein the user action includes information on the name of the user action to be performed, information on the number of input parameters used in the user action, information on the number of output parameters output as the results of the user action, and information on the level of access to the user action.

5. The nonlinear video editing method of claim 3 or 4, wherein the resources include a transform that denotes transitions and effects that are used to describe a user action to be performed, a physically existing real video clip, and a virtual union of the transform and the real video clip.

6. The nonlinear video editing method of claim 3, 4 or 5, wherein, in the rendering step, the results are a list of performed user actions, logical results of user actions performed before the rendering operation, and real video files.

7. The nonlinear video editing method of claim 4, 5 or 6, wherein the user actions include a resource importing action, a resource closing action, an editing result deleting action, an editing result exporting action, a clip splitting action, a clip merging action, and a clip inserting action.

8. The nonlinear video editing method of claim 7, wherein the resource importing action means to receive local files from an external source or data from a digital camera or an Internet streaming source and edit the received files and data.

9. The nonlinear video editing method of claim 7 or 8, wherein the editing result exporting action means to store the editing results in a special data format designated by a user, such as, MPEG-2 format.

10. A computer recording medium which stores a computer program for executing the method of any preceding claim.

11. A nonlinear video editing apparatus comprising:

      a user action initialization unit (1810) initializing available user actions;

      a user action input unit (1820) receiving a user action selected by a user from the initialized available user actions;

      a resource input unit (1830) receiving input resources used to perform the selected user action;

      a user action performing unit (1840) performing the selected user action;

      a result examining unit (1850) examining the results of the selected user action; and

      a rendering unit (1860) confirming finishing of the selected user action and rendering the results of editing.

12. The nonlinear video editing apparatus of claim 11, wherein the user action includes information on the name of the user action to be performed, information on the number of input parameters used in the user action, information on the number of output parameters output as the results of the user action, and information on the level of access to the user action.

13. A graphic user interfacing method in a nonlinear video editor, the method comprising:

      presenting available user actions to a user and providing a screen for receiving a user action selected by the user;

      providing a file source screen for presenting and displaying a source file used to perform the selected user action; and

      providing a result screen for displaying results of the selected user action performed using a source file selected by the user.

14. The graphic user interfacing method of claim 13, wherein each of the available user actions is expressed in a resource that represents input files used to perform a user action, a transform that denotes one of a transition and an effect which are used to describe the user action with respect to the resource, and a virtual union (vunion) of the resource and the transform.

15. The graphic user interfacing method of claim 14, wherein the resource includes information on the time to start displaying the resource, information on the time to stop displaying the resource, information on the time to start editing the resource, information on the time to stop editing the resource, information on the name of a resource file, and information on whether sound is available.

16. The graphic user interfacing method of claim 14 or 15, wherein the vunion includes information on the time to start editing the resource, information on the time to stop editing the resource, and information on whether sound is available.

# FIG. 1

| TIME | 1.....2.....3.....4.....5.....6.....7.....8.....9.....10 |
|---|---|
| VIDEO TRACK 1 | ############ |
| TRANSITION | $$$$$ |
| VIDEO TRACK 2 | ############### |
| TRANSITION | |
| VIDEO TRACK 3 | |
| ... | |
| AUDIO TRACK 1 | *************** |
| AUDIO TRACK 2 | |
| ADDITIONAL TRACKS | |

# FIG. 2

| CLIP AREA | | T | | CLIP AREA | | T | | CLIP AREA | | T | | CLIP AREA |

# FIG. 3

START

INITIALIZE LIST OF
AVAILABLE USER ACTIONS — 310

SELECT ACTION FROM
AVAILABLE USER ACTIONS LIST — 320

SELECT INPUT RESOURCES — 330

PERFORM SELECTED USER
ACTION AND EXAMINE RESULTS
OF THE PERFORMANCE — 340

CONFIRM FINISHING ACTION — 350

RENDER RESULTS — 360

END

# FIG. 4

```
<action name="XXX1" ninput="N1" noutput="N2" userid="XXX2" CLSID="clsid
 help="XXX3">
  <input name="YYY1">
        <name="P1"/>
        <name="P2"/>
            .....
        <name="PN"/>
  </input>
  <input name="YYY2">
        <name="P1"/>
        <name="P2"/>
            .....
        <name="PN"/>
  </input>

  ......

  <output name="ZZZ1">
        <name="P1"/>
        <name="P2"/>
            .....
        <name="PN"/>
  </output>
  <output name="YYY1">
        <name="P1"/>
        <name="P2"/>
            .....
        <name="PN"/>
  </output>

  ......

</action>
```

# FIG. 5

| TEMPLATE | ATTRIBUTES | DESCRIPTION |
|---|---|---|
| TRANSFORM TEMPLATE | CLSID | UNIQUE GLOBAL IDENTIFICATION NUMBER |
| | mute | WHETHER SOUND IS AVAILABLE OR NOT DURING TRANSITION (TRUE OR FALSE) |
| | mstart | START TIME OF TRANSFORM RELATIVE TO MAIN STREAM |
| | mstop | STOP TIME OF TRANSFORM RELATIVE TO MAIN STREAM |
| RESOURCE TEMPLATE | start | START TIME FOR DISPLAYING RELATIVE TO THE BEGINNING OF REAL CLIP |
| | stop | STOP TIME FOR DISPLAYING RELATIVE TO REAL CLIP |
| | mstart | START TIME OF DISPLAYING CLIP RELATIVE TO EDITING MODEL |
| | mstop | STOP TIME OF DISPLAYING CLIP RELATIVE TO EDITING MODEL |
| | src | RESOURCE FILE NAME |
| | fname | FILE NAME APPLICABLE IF DESTINATION FILE NAME DIFFERS FROM ORIGIN ONE |
| | stream | NUMBER OF STREAMS IN ORIGINAL FILE |
| | mute | TRUE OR FALSE DEPENDS IF SOUND IS AVAILABLE OR NOT |
| VUNION TEMPLATE | mstart | START TIME OF DISPLAYING CLIP RELATIVE TO EDITING MODEL |
| | mstop | STOP TIME OF DISPLAYING CLIP RELATIVE TO EDITING MODEL |
| | mute | TRUE OR FALSE DEPENDS IF SOUND IS AVAILABLE OR NOT |
| | fname | DESTINATION FILE IF APPLICABLE |

# FIG. 6

```
<action name="SPLIT" ninput="1" noutput="2" userid="0"  CLSID="ID_SPLIT"
 help="some tips">
  <input name="RESOURCE">
       <name="framerate"/>
       <name="start"/>
       <name="stop"/>
       <name="src"/>
   <name="stream"/>
  </input>

  <output name="VUNION">
 <name="framerate"/>
       <name="start"/>
       <name="stop"/>
       <name="stream"/>
       <name="src"/>
       <name="fname"/>
  </output>
  <output name="VUNION">
       <name="start"/>
       <name="framerate"/>
       <name="start"/>
       <name="stop"/>
       <name="src"/>
       <name="stream"/>
       <name="fname"/>
  </output>
</action>
```

# FIG. 7

```
<action name="TRANSITION" ninput="3" noutput="1" userid="0"
 CLSID="ID_TRANSITION" O
help="some tips">
  <input name="clip">
      <name="framerate"/>
      <name="start"/>
      <name="stop"/>
      <name="src"/>
      <name="stream"/>
  </input>
  <input name="clip">
      <name="framerate"/>
      <name="start"/>
      <name="stop"/>
      <name="mstart"/>
      <name="src"/>
      <name="stream"/>
  </input>
  <input name="transition">
      <name="clsid"/>
      <name="mute"/>
      <name="start"/>
      <name="stop"/>
  </input>
  <output name="vunion">
      <name="lock"/>
      <name="mute"/>
      <name="mstart"/>
      <name="mstop"/>
      <name="fname"/>
  </output>
</action>
```

# FIG. 8

```
<action name="MERGE" ninput="2" noutput="1" userid="0" CLSID="ID_MERGE"
 help="some tips">
  <input name="clip">
      <name="framerate"/>
      <name="start"/>
      <name="stop"/>
      <name="src"/>
      <name="stream"/>
  </input>
  <input name="clip">
      <name="framerate"/>
      <name="start"/>
      <name="stop"/>
      <name="src"/>
      <name="stream"/>
  </input>
  <output name="vunion">
      <name="lock"/>
      <name="mute"/>
      <name="mstart"/>
      <name="mstop"/>
      <name="fname"/>
  </output>
</action>
```

# FIG. 9

```
<action name="INSERT" ninput="2" noutput="1" userid="0" CLSID="ID_INSERT"
 help="some tips">
  <input name="clip">
      <name="framerate"/>
      <name="start"/>
      <name="stop"/>
      <name="src"/>
      <name="stream"/>
  </input>
  <input name="clip">
      <name="framerate"/>
      <name="start"/>
      <name="mstart"/>
      <name="stop"/>
      <name="src"/>
      <name="stream"/>
  </input>
  <output name="vunion">
      <name="lock"/>
      <name="mute"/>
      <name="mstart"/>
      <name="mstop"/>
      <name="fname"/>
  </output>
</action>
```

# FIG. 10

| NO. | ACTION NAME | DESCRIPTION |
|---|---|---|
| 1 | IMPORT RESOURCE | AN EDITING PROCESS DEALS WITH MEDIA RESOURCES, SUCH AS, LOCAL FILES, DV, CAMERA CASSETTES, INTERNET STREAMING RESOURCES, AND THE LIKE. IMPORT RESOURCE MEANS TO MARK THE AVAILABILITY OF RESOURCES UPON EDITING AND RECEIVE A SPECIAL RESOURCE MONIKER AND INFORMATION ABOUT THE RESOURCES. |
| 2 | CLOSE RESOURCE | TO FREE A RESOURCE MONIKER AND MAKE RESOURCES UNAVAILABLE FOR DIRECT EDITING IN SUBSEQUENT STAGES. |
| 3 | DELETE EDITING RESULT | TO DELETE SOME EDITING RESULTS. THIS PROCEDURE HELPS USERS TO STORE ONLY VALUABLE RESULTS. |
| 4 | EXPORT EDITING RESULT | AFTER PERFORMING SOME EDITING ACTIONS, RESULTS MUST BE SAVED IN A SPECIAL FORMAT, SUCH AS, MPEG 2 FORMAT |
| 5 | SPLIT CLIP | TO SPLIT A WHOLE CLIP INTO PIECES THAT START/FINISH AT A CERTAIN TIME |
| 6 | MERGE CLIP | TO MERGE SEVERAL DIFFERENT CLIPS INTO ONE WHOLE CLIP |
| 7 | INSERT CLIP | TO INSERT ONE CLIP, CALLED A SOURCE, AT A CERTAIN TIME INTO ANOTHER CLIP, CALLED A TARGET |
| 8 | DEFINE TRANSFORM | TO ALLOW USER TO DEFINE TRANSFORMS (EFFECT, TRANSITIONS) |

# FIG. 11

SOURCE

RESULT

SPLIT

INSERT

MERGE

TRANSFORM

TRASH

IMPORT

EXPORT

# FIG. 12

SPLIT

SOURCE

RESULT

CLIP 1

CLIP

APPL

CANCEL

# FIG. 13

```
<action name="SPLIT" ninput="1" noutput="2" userid="0" CLSID="ID_SPLIT"
 help="some tips">
  <input name="clip">
        <start="0"/>
        <stop="17"/>
        <src="myclip.mpg"/>
  </input>
  <output name="clip">
        <start="0"/>
        <stop="10"/>
        <src="myclip.mpg"/>
  </output>
  <output name="clip">
        <start="10"/>
        <stop="17"/>
        <src="myclip.mpg"/>
  </output>
</action>
```

# FIG. 14

```
<action name="INSERT" ninput="2" noutput="1" userid="0" CLSID="ID_INSERT"
 help="some tips">
  <input name="clip">
        <start="0"/>
        <stop="10"/>
        <src = "targetclip.mpg"/>
  </input>
  <input name="clip">
        <start="0"/>
        <stop="27"/>
        <src = "clip.mpg"/>
  </input>

<output name="vunion">
  <output name="clip">
        <start="0"/>
        <stop="4"/>
        <mstrat="0"/>
        <src = "targetclip"/>
  </output>
  <output name="clip">
        <mstart="4"/>
        <start="0"/>
        <stop="27"/>
        <src = "clip.mpg"/>
  </output>
  <output name="clip">
        <start="4"/>
        <stop="10"/>
        <mstart="31"/>
        <src = "targetclip.mpg"/>
  </output>
</output>
</action>
```

# FIG. 15

```
<RESOURCE>                  <TRANSFORM>
  <start ="..." />            <clsid="..."/>        <VUNION>
  <stop = "..."/>             <mute="..."/>           <mstart="..."/>
  <mstart = "..."/>           <mstart="..."/>         <mstop="..."/>
  <mstop = "..."/>            <mstop="..."/>          <mute="..."/>
  <src = "..."/>              .....                   <fname="..."/>
  <fname = "..."/>          </TRANSFORM>            </VUNION>
  <stream= "..."/>
  <mute="..."/>
</RESOURCE>
```

## FIG. 16

```
<VUNION>
    <mstart=1/>
    <mstop=31/>
    <VUNION/>
      <mstart=0/>
      <mstop=33/>
      <RESOURCE>
              <src="AAA.AVI"/>
              <mstart=0/>
              <mstop=4/>
    </RESOURCE>
    <RESOURCE>
              <src="BBB.AVI"/>
              <mstart=0/>
              <mstop=23/>
              <start=4/>
    </RESOURCE>
    <RESOURCE>
              <src="AAA.AVI"/>
              <mstart=27/>
              <mstop=33/>
    </RESOURCE>
  </VUNION>
</VUNION>
```

# FIG. 17

```
<VUNION/>
    <mstart=1>
    <mstop=31>
    <RESOURCE>
        <src="AAA.AVI"/>
        <mstart=1>
        <mstop=4/>
    </RESOURCE>
    <RESOURCE>
        <src="BBB.AVI"/>
        <mstart=0/>
        <mstop=23/>
        <start=4/>
    </RESOURCE>
    <RESOURCE>
        <src="AAA.AVI"/>
        <mstart=26>
        <mstop=31>
    </RESOURCE>
</VUNION>
```

## FIG. 18

```
        1810
┌──────────────┐
│ USER ACTION  │
│INITIALIZATION│─────┐
│    UNIT      │     │
└──────────────┘     │
                     │    1840              1850              1860
        1820         │ ┌──────────┐      ┌──────────┐      ┌──────────┐
┌──────────────┐     └─│USER ACTION│─────│  RESULT  │──────│RENDERING │───────
│ USER ACTION  │─────┐ │PERFORMING │     │EXAMINATION│     │   UNIT   │
│  INPUT UNIT  │     │ │   UNIT   │      │   UNIT   │      └──────────┘
└──────────────┘     │ └──────────┘      └──────────┘
                     │
        1830         │
┌──────────────┐     │
│  RESOURCE    │─────┘
│  INPUT UNIT  │
└──────────────┘
```

## FIG. 19

```
                    ┌─────────┐
                    │  START  │
                    └────┬────┘
                         │              1910
                    ┌────▼──────────────────┐
                    │ PERFORM INITIALIZATION │
                    └────┬───────────────────┘
                         │              1920
                    ┌────▼────┐      NO
                    │ K ≤ N ? ├──────────────────────┐
                    └────┬────┘                      │
                         │ YES    1930               │
                    ┌────▼──────────────┐            │
                    │ CALCULATE A⁻¹ₖ    │            │
                    └────┬──────────────┘            │
                         │              1940         │
                    ┌────▼────┐                      │
                    │   IS    │    NO                │
                    │CALCULATED├──────────┐          │
                    │A⁻¹ₖ REAL│           │          │
                    │ FILE?   │           │          │
                    └────┬────┘           │          │
                         │ YES  1950      │  1960    │
            ┌────────────▼──────┐  ┌──────▼───────┐  │
            │ CHECK AVAILABILITY│  │ CHECK IF THIS│  │
            │ OF RESOURCES AND  │  │ IS AN ELEMENT│  │
            │ PROCESS SET C     │  │ OF SET Z     │  │
            └────────────┬──────┘  └──────┬───────┘  │
                         │◄───────────────┘          │
                         │              1970         │
              YES   ┌────▼────┐                      │
         ┌──────────┤IS RESOURCE│                    │
         │          │AVAILABLE? │                    │
         │          └────┬────┘                      │
         │               │ NO     1980               │ 1990
         │          ┌────▼──────────┐        ┌───────▼────────┐
         │          │    OUTPUT     │        │   CALCULATE    │
         │          │WARNING MESSAGE│        │   Z=ZUAₖ       │
         │          └────┬──────────┘        └───────┬────────┘
         │               │◄──────────────────────────┘
         │          ┌────▼────┐
         │          │   END   │
         │          └─────────┘
         └──────────────┘
```

# FIG. 20

# FIG. 21

START

SET AVSEL STRING
TO NULL AND
RECEIVE ELEMENT — 2110

IS RECEIVED
ELEMENT STANDARD
ELEMENT? — 2120

YES → RECEIVE ANOTHER
AVSEL STRING — 2130

NO

CALCULATE mstart — 2140

CALCULATE mstop — 2150

TURN CHILD ELEMENT
INTO PARENT ELEMENT — 2160

OUTPUT AVSEL STRING — 2170

END